# EUROPEAN PATENT SPECIFICATION

(11) **EP 0 488 441 B1**
(45) Date of publication and mention of the grant of the patent: **04.02.1998**
(21) Application number: 91202995.6
(22) Date of filing: 19.11.1991
(51) Int. Cl.: G06T 1/00

(54) **Image storage device and image processing device comprising the image storage device**
Bildspeicheranordnung sowie Bildverarbeitungsanordnung mit der Bildspeicheranordnung
Dispositif d'enregistrement d'une image et dispositif de traitement d'image comprenant ce dispositif d'enregistrement

(30) Priority: 28.11.1990 NL 9002593
(43) Date of publication of application: 03.06.1992
(73) Proprietor: Philips Electronics N.V., 5621 BA Eindhoven (NL)
(72) Inventor: van Lier, Antonius Johannus Maria, NL-5656 AA Eindhoven (NL)
(74) Representative: de Haas, Laurens Johan

(56) References cited:
- GB-A- 2 180 378
- MICROPROCESSING AND MICROPROGRAMMING vol. 21, no. 1-5, August 1987, AMSTERDAM pages 57 - 64; N. KANOPOULOS ET AL.: 'A monolithic scan-line bit producer for real-time image rasterization'
- PROCEEDINGS OF THE 4TH BRITISH ROBOT ASSOCIATIONANNUAL CONFERENCE, 1981 pages 111 - 120; J.P. FOITH ET AL.: 'S.A.M.- Sensorsystem for automation and measurement'

## Description

The invention relates to an image processing device which comprises
- an input for receiving a line-wise presented image signal from an image pick-up device, the image signal containing pixels;
- a working memory for storing pixels.

Such a device is known from an article in the proceedings of the 4th British Robot Association Annual Conference (1981) pages 111-120, by J.P.Foith et al., titled "S.A.M. sensor system for automation and measurement".

In an image storage device of this kind an image is picked up by an image pick-up device such as, for example, a CCD camera, and is written, under the control of control signals from the image pick-up device, into a working memory, for example a frame buffer, for further processing, for example error detection and analysis, by a computer.

The aforementioned article describes one form of analysis, wherein regions in the image are labelled and all but selected regions are filtered out of the image to eliminate disturbance from other regions during analysis.

In the case of very large images, the processing of the image in the working memory is so time consuming that real-time processing is not feasible. The use of a number of parallel computers in order to increase the processing speed is complex and very expensive.

It is *inter alia* an object of the invention to provide an image storage device in which relevant areas of a line-wise presented very large image are selectively stored for possible real-time processing. To this end, the invention provides an image processing which is characterized in that it contains
- a processor for detecting image characteristics in the image signal at the input;
- a multi-image line delay device which delays the image signal from the input;
- means for identifying a grid of uniform multi-pixel cells in the image signal;
- means for selectively storing only those cells in which the processor has detected the image characteristics, the cells being stored into the working memory via the delay line, the selectively stored cells being retained together in the working memory,
- means for storing information concerning the location of the selectively stored cells in the grid, and
- means for storing information concerning the position and the nature of the detected image characteristics per cell. Thus, only the relevant image areas or cells in which the image characteristics (for example, errors or given shapes) have been detected by the processor are stored in the working memory, information as regards the contents and the location of the cells in the image also being kept so that the relationship of the cells stored is known. The image signal is scanned only once, such a reduction of image data being achieved in hardware that real-time further processing in software is possible. Relevant cells are never stored more than once. A fast hardware module for an image processing device is thus achieved.

An embodiment of an image storage device in accordance with the invention is characterized in that the means for storing in the working memory at least the cells in which image characteristics have been detected are also suitable for storing neighbour cells of said cells, the means for storing information concerning the location of these cells in the grid also being suitable for storing information concerning the location of neighbour cells of these cells. Thus, an environment of the relevant cells which is free from image characteristics is also stored; this is of advantage for the further processing.

An embodiment of an image storage device in accordance with the invention is characterized in that the image storage device also comprises means for generating addresses for the display of cells in which the image characteristics have been detected, and also of their neighbour cells, on a display device. Relevant areas of the image can thus be simply displayed.

An embodiment of an image storage device in accordance with the invention is characterized in that the means for storing information concerning the position and the nature of the detected image characteristics per cell have an additional facility for communication with the computer in order to read data or in that the means for storing information concerning the location in the grid of cells in which the image characteristics have been detected have an additional facility for communication with the computer in order to read data. The further processing can thus be accelerated; it is not necessary for the computer to wait.

### BRIEF DESCRIPTION OF THE FIGURES.

Fig. 1 shows an image processing device comprising an image storage device in accordance with the invention,
Fig. 2 shows an image storage device in accordance with the invention;
Fig. 3 illustrates an image of a printed circuit board containing an error;
Fig. 4 shows a circuit for generating an environment;
Fig. 5 shows an embodiment of a part of the image storage device in accordance with the invention; and
Fig. 6 shows an embodiment of a further part of the image storage device in accordance with the invention.

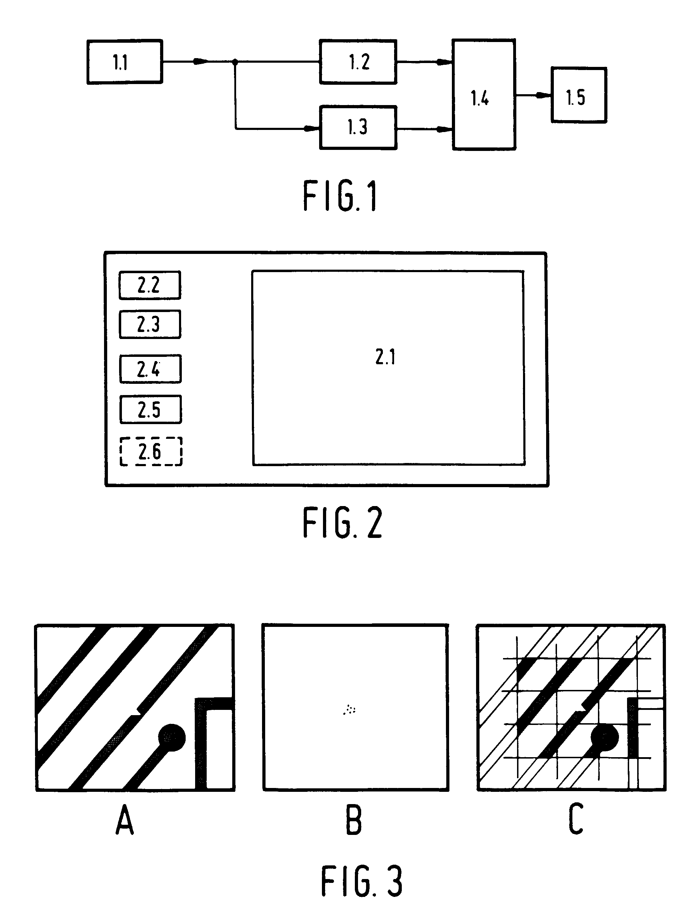

In Fig. 1 an image signal from an image pick-up device 1.1 such as, for example a laser scanner, is first applied to a known hardware processor 1.2 (see, for example United States Patent Specification No. 4,736,438) which detects given image characteristics (for example, faults upon comparison with a reference model, edges, intensity gradients, given shapes or grey value gradients), on the basis of which the processor delivers trigger data, such as addresses of detected image characteristics or categories of image characteristics, to the image storage device 1.4. The image signal is also applied to a multi-image line delay device 1.3, for example for 64 image lines, in which it is delayed. As a result, an environment of an image characteristic detected in the image signal (referred to hereinafter as "error" for the sake of simplicity) can be stored in the working memory. This is because the image data stream is serial and line-wise, so that image data of image lines preceding an error and hence forming part of the environment of the error must be temporarily stored. The entire procedure is executed under the control of control signals originating from the image pick-up device (for example, signals indicating the end of an image line or the end of an image). Subsequently, the stored relevant areas of the image can be further processed in a computer (post-processor 1.5) which performs, for example a more detailed error analysis in software. The computer can determine, for example a finer classification into error categories.

Fig. 2 diagrammatically shows an image storage device in accordance with the invention. It comprises the following elements yet to be described: a working memory 2.1, means 2.2 for generating a grid of cells of pixels, means 2.3 for storing in the working memory at least three cells in which image characteristics have been detected, means 2.4 for storing information concerning the location of cells in which the image characteristics have been detected, means 2.5 for storing information concerning the position and the nature of the detected image characteristics per cell, and optionally means 2.6 for generating addresses for the display of cells in which the image characteristics have been detected and of their neighbour cells, by a display device. The device is fed under the control of control signals from the image pick-up device (not shown), it being possible for a computer (not shown) to commence the further software processing already during the storage of the relevant areas of the image and the associated information.

A laser scanner which scans, for example a printed circuit board, produces an image (for example, a 3-dimensional image with combined intensity and height information which is converted into a 2-dimensional image signal) of, for example 32 K x 32 K pixels per image. Such an image is too large to be stored in its entirety in a frame buffer for real-time processing: real-time analysis of such images is too time-consuming. Therefore, in accordance with the invention exclusively relevant areas of the image are stored for further processing. To this end, each image is subdivided into uniform, multi-pixel image areas, so-called cells, preferably rectangular cells comprising m x n pixels, where m and n are arbitrary positive integers. By way of example, the value 32 will be chosen hereinafter for m and n. In that case the cells are square. Each image of 32 K x 32 K pixels is subdivided into a grid of 1024 x 1024 disjunct cells. The means (2.2) for generating this grid of cells consist, for example of two counters: one for counting down cells in the horizontal direction and one for counting down cells in the vertical direction. The horizontal cell counter is incremented every 32 pixels, and the vertical cell counter is incremented every 32 image lines. Both counters are 10-bit counters. Evidently, another image size or another cell size or cell shape are also possible; the appropriate dimensions of the counters can be simply determined.

Fig. 3A shows an area of an image of a printed circuit board (PCB) containing an error. Fig. 3B shows the error as detected by the hardware processor. Fig. 3C illustrates which cells are stored in the image storage device.

The means (2.5) for storing information concerning the position and the nature of the detected image characteristics per cell comprise an auxiliary memory, for example a random-access memory (RAM), in which 1024 words (the number of cells in the horizontal direction) can be stored. It is addressed by the horizontal cell counter: each word in the auxiliary memory is associated with its correspondingly situated cell in the horizontal row of cells with which the auxiliary memory is involved at the relevant instant. The auxiliary memory serves to collect information concerning relevant cells per horizontal row of cells. Each word of the auxiliary memory contains a flag bit which is initialized to have the logic value 0 and which assumes the logic value 1 as soon as an image characteristic is detected in the associated cell. Because the image data is line-wise presented, of course, the horizontal row of cells is also scanned in the form of image lines. For each word in the auxiliary memory whose flag bit has the logic value 1 the following information is updated during scanning and written into the auxiliary memory under the control of control signals from the image pick-up device:
- the position of the pixel within the relevant cell giving rise to the change of the logic value of the flag bit from 0 to 1; this position is stored as a 5-bit x coordinate and a 5-bit y coordinate with respect to the first cell pixel scanned (the "top left-hand corner");
- the weight of the image characteristic: the number of pixels within the cell for which the image characteristic has been detected; a 10-bit counter which is adapted each time when the current scanned image signal traverses the relevant cell;
- the image characteristic code: this code is assigned to different kinds of detected image characteristics by the hardware processor; storage is realized utilizing, for example 7 bits.

The means (2.5) for storing information concerning the position and the nature of the detected image characteristics per cell also comprise a cell information memory in which the auxiliary memory words which contain a flag bit having the logic value 1 after the last pixel of the relevant cell has been scanned are copied. At the same time these words are erased in the auxiliary memory. After the scanning of the last pixel of the last cell in the row, the next horizontal row of cells can be processed. The information thus fully accumulated for each cell scanned is stored in the cell information memory at the next free address. Because in many applications the auxiliary memory will contain only a few cells with a flag bit having the logic value 1 after each row of cells, a RAM of, for example 2 K words with a word length equal to that of the auxiliary memory (*i.e.* 28 bits) will suffice for the cell information memory. For example, when the working memory 2.1 can contain 2 M words, so 2 K cells, approximately 400 cells containing errors can be stored plus approximately 1600 neighbour cells. The choice of the capacities of the memories used, of course, depends on the size of the working memory.

The cell information memory preferably has an additional facility for communication with the computer so that the latter can read data from the memory for further processing also when a write operation takes place in the memory. The memory is then dual-ported. The flag bit can then serve to indicate the extent of filling of the cell information memory. It is to be noted that the working memory need not be dual-ported: writing therein takes place only during a comparatively small fraction of the time, so that the computer has ample time for reading.

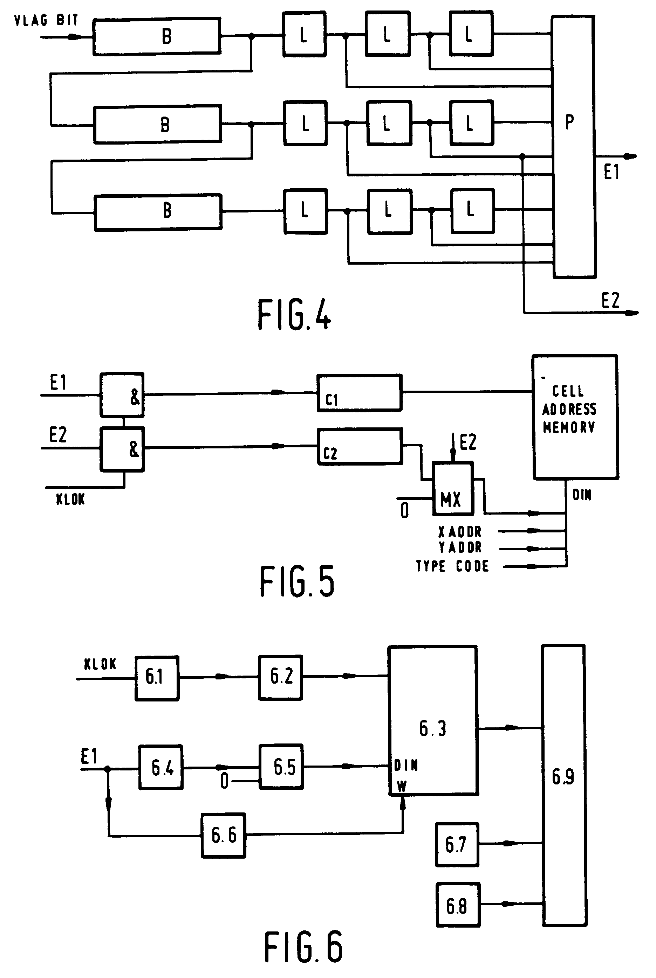

The means (2.4) for storing information concerning the location of the cells in which the image characteristics have been detected comprise a cell address memory, for example a RAM for 2 K words, in which the addresses of relevant cells (cells containing detected image characteristics and neighbour cells) in the grid are stored. This cell address memory also contains for each address a reference to the associated word in the cell information memory (the rank number in the cell information memory). If there is no associated word (a neighbour cell without image characteristics), this reference is a dummy value, for example "0". The cell address memory will contain the location of the cell in the grid for each cell of 32 x 32 pixels stored in the working memory 2.1 and the cell information memory will contain (if a cell containing detected image characteristics is concerned) the information concerning the position and the nature of the detected image characteristics. This separate storage of cell addresses and cell information results in a high flexibility: the address can thus be stored at a different instant with respect to the storage of the information. This is advantageous when an environment of cells neighbour cells containing detected image characteristics is also stored: using the flag bit of a cell, an environment of neighbouring cells which do not contain image characteristics can be determined in an environment generating circuit (see Fig. 4). The storage of the cell address is thus postponed. This image characteristic-free environment is of importance for the post-processor 1.5: it facilitates the further processing.

Fig. 4 shows the environment generating circuit. It comprises three line buffers B, nine window latches L and an OR-gate P. The line buffers are written once per 32 lines and are read every line. This known circuit determines signals E1 and E2 which are used to store cells containing image characteristics and neighbour cells thereof (without image characteristics). Hereinafter, cells in which image characteristics have been detected will be referred to as error cells for the sake of simplicity. Cells which adjoin an error cell (horizontally, vertically or diagonally) and which need not contain image characteristics themselves will be referred to as neighbour cells. The input of the circuit consists of flag bits from the cells. These flag bits are delayed in the line buffers B in such a manner that flag bits of cells which are vertically adjacent in the image are also vertically adjacent in the window (formed by the 9 latches L). The signal E1 assumes the logic value 1 when at leat one of the flag bits in the window has the logic value 1. The signal E2 assumes the same logic value as the flag bit in the centre of the window. When E1 has the logic value 1 and E2 has the logic value 0, the cell associated with the flag bit in the centre of the window will be a neighbour cell. When E2 has the logic value 1, the cell associated with the flag bit in the centre of the window will be an error cell. Conversely, the flag bit of every error cell will at some time be situated in the centre of the window (E2 = 1) and, when a flag bit of a neighbour cell arrives at the centre of the window, at least one other flag bit in the window must have the logic value 1 (E1 = 1, E2 = 0). Each time when E1 = 1, the cell associated with the flag bit at the centre of the window is stored in the working memory 2.1 and the grid address of the cell is stored in the cell address memory. The signals E1 and E2 are 2-bit binary encoded as a type code:
- 11:: E1 = E2 = 1 (error cell to be stored)
- 10:: E1 = 1, E2 = 0 (neighbour cell to be stored)
- 00:: E1 = E2 = 0 (no error cell or neighbour cell to be stored).

The signals E1 and E2 are used to increment two counters (see Fig. 5). A counter C1 sums the logic values of E1, thus counting how many (neighbour and error) cells are to be stored. This count becomes the address for the cell address memory. A further counter C2 sums the logic values of E2, thus counting the error cells. This count is applied to a multiplexer MX which also receives the signal "0", the signal E2 being used as the input select signal for the multiplexer. If E2 = 0, the multiplexer outputs the value 0; if E2 = 1, the multiplexer outputs the value of the latter counter. The output of the multiplexer thus constitutes the reference number to the word in the cell information memory associated with the error cell. This reference number is applied, together with the type code and the grid coordinates of the cell, to the data input of the cell address memory. The 2 K words in this cell address memory are then 33-bit words. The cell address memory preferably also has an additional facility for communication with the computer so that the latter can read data for further processing from the memory even when a write operation takes place in the memory. Therefore, the memory is dual-ported.

The working memory 2.1 is capable of storing, for example 512 K 8-bit words. A cell comprising 32 x 32 pixels is stored in an address block comprising 1.024 address locations. There are 512 of such blocks. The number of address bits for the working memory then amounts to 19. The addresses where the image signal delayed in the multi-image-line delay device is to be stored are generated by the means (2.3) for storing in the working memory at least those cells in which the image characteristics have been detected. These means ensure that, even though the image signal is line-wise available so that image data from different error areas can be scanned in an intermixed manner, every relevant cell (error cell or neighbour cell) is coherently stored in the working memory. The means 2.3 comprise (see Fig. 6) a random-access memory which acts as a line buffer and in which numbers of relevant cells are stored. This is realised as follows. For cells to be stored, a cell number (originating from the counter C1 of Fig. 5) is written into the line buffer; for other cells a dummy value "0" is written therein. A cell number is retained in the line buffer for 32 image lines. A cell number written into the line buffer remains selected for 32 pixels (32 clock pulses).

The means 2.3 may notably be constructed as shown in Fig. 6. A counter 6.1 supplies an address counter 6.2 with a pulse every 32 pixels (32 clock pulses). The counter is reset after each image line. The address counter 6.2 applies the address bits to the line buffer 6.3 which can contain 1.0249-bit words. The counter 6.4 is the same as the counter C1 shown in Fig. 5. It counts the error cells and neighbour cells, by way of the flag bits, up to a maximum of, for example, 512. The counter is reset after each image. The multiplexer 6.5 applies the cell number from the counter 6.4 to the line buffer when the counter 6.4 was incremented. If not, the multiplexer applies the dummy value "0" to the line buffer. A write pulse generator 6.6 applies a write pulse to the line buffer 6.3. The write pulse is the delayed trigger pulse from the counter 6.4 and overcomes the delay caused by the counter and the multiplexer. The line buffer 6.3 thus applies the correct numbers as addresses to the address memory 6.9 in which they are latched so as to be applied to the working memory. The write address register 6.9 is, for example of the tri-state type, there being provided appropriate registers for read addresses and display addresses. When one of the registers is selected, the other two registers are deselected.

Row counter 6.7 and column counter 6.8 provide the address register 6.9 with the coordinates within a cell for the storage of the delayed image data.

For coherent display of cells from the working memory, the computer extracts the necessary information from the cell address memory. Optional means 2.6 for generating addresses for the display of cells in which the image characteristics have been detected, and of their neighbour cells on a display device provide the coupling between the display device and the working memory. This is realised, for example utilizing a look-up table (LUT) in which the computer writes numbers of cells to be displayed. The means 2.6 then control the correct addressing of the LUT.

## Claims

1. An image processing device which comprises
- an input for receiving a line-wise presented image signal from an image pick-up device (1.1), the image signal containing pixels;
- a working memory (2.1) for storing pixels;
characterized, in that the image processing device contains
- a processor (1.2) for detecting image characteristics in the image signal at the input;
- a multi-image line delay device (1.3) which delays the image signal from the input;
- means (2.2) for identifying a grid of uniform multi-pixel cells in the image signal;
- means (2.3) for selectively storing only those cells in which the processor has detected the image characteristics, the cells being stored into the working memory (2.1) via the delay line (1.3), the selectively stored cells being retained together in the working memory (2.1),
- means (2.4) for storing information concerning the location of the selectively stored cells in the grid, and
- means (2.5) for storing information concerning the position and the nature of the detected image characteristics per cell.

2. An image processing device as claimed in Claim 1, characterized in that the means (2.3) for selectively storing store also store neighbour cells of said cells of the cells in which the processor (1.2) has detected the image characteristics, the means (2.4) for storing information concerning the location of the selectively stored cells also being suitable for storing information concerning the location of neighbour cells of the cells in which the processor (1.2) has detected the image characteristics.

3. An image processing device as claimed in Claim 1 or 2, characterized in that the image processing device also comprises means (2.6) for generating addresses for the display of cells in which the image characteristics have been detected, and also of their neighbour cells, on a display device.

4. An image processing device as claimed in any one of the Claims 1 to 3, characterized in that the means (2.5) for storing information concerning the position and the nature of the detected image characteristics per cell have an additional facility for communication with a computer (1.5) in order to read data.

5. An image processing device as claimed in any one of the Claims 1 to 4, characterized in that the means (2.4) for storing information concerning the location in the grid of cells in which the image characteristics have been detected have an additional facility for communication with a computer (1.5) in order to read data.

## Patentansprüche

1. Bildverarbeitungseinrichtung, die
- einen Eingang zum Empfangen eines zeilenweise angebotenen Bildsignals aus einer Bildaufnahmeeinrichtung (1.1), wobei das Bildsignal Pixel enthält;
- einen Arbeitsspeicher (2.1) zum Speichern von Pixeln umfaßt;
dadurch gekennzeichnet, daß die Bildverarbeitungseinrichtung
- einen Prozessor (1.2) zum Detektieren von Bildmerkmalen in dem Bildsignal am Eingang;
- eine Mehrbildzeilen-Verzögerungsanordnung (1.3), die das vom Eingang kommende Bildsignal verzögert;
- Mittel (2.2) zum Identifizieren eines Rasters aus uniformen Mehrpixelzellen in dem Bildsignal;
- Mittel (2.3) zum selektiven Speichern nur derjenigen Zellen, in denen der Detektor die Bildmerkmale detektiert hat, wobei die Zellen über die Verzögerungsleitung (1.3) in den Arbeitsspeicher (2.1) eingespeichert werden und die selektiv gespeicherten Zellen zusammen im Arbeitsspeicher festgehalten werden;
- Mittel (2.4) zum Speichern von Informationen hinsichtlich des Ortes der selektiv gespeicherten Zellen in dem Raster und
- Mittel (2.5) zum Speichern von Informationen hinsichtlich der Position und der Art der detektierten Bildmerkmale pro Zelle enthält.

2. Bildverarbeitungseinrichtung nach Anspruch 1, dadurch gekennzeichnet, daß die Mittel zum selektiven Speichern auch Nachbarzellen der genannten Zellen, in denen der Prozessor (1.2) die Bildmerkmale detektiert hat, speichern, wobei die Mittel (2.4) zum Speichern von Informationen hinsichtlich des Ortes der selektiv gespeicherten Zellen auch geeignet sind, Informationen hinsichtlich des Ortes der Nachbarzellen der Zellen, in denen der Prozessor (1.2) die Bildmerkmale detektiert hat, zu speichern.

3. Bildverarbeitungseinrichtung nach Anspruch 1 oder 2, dadurch gekennzeichnet, daß die Bildverarbeitungseinrichtung auch Mittel (2.6) umfaßt zum Erzeugen von Adressen, um Zellen, in denen die Bildmerkmale detektiert worden sind, und auch deren Nachbarzellen auf einer Wiedergabeeinrichtung wiederzugeben.

4. Bildverarbeitungseinrichtung nach einem der Ansprüche 1 bis 3, dadurch gekennzeichnet, daß die Mittel (2.5) zum Speichern von Informationen hinsichtlich der Position und der Art der detektierten Bildmerkmale pro Zelle eine zusätzliche Möglichkeit zur Kommunikation mit einem Computer (1.5) haben, um Daten zu lesen.

5. Bildverarbeitungseinrichtung nach einem der Ansprüche 1 bis 4, dadurch gekennzeichnet, daß die Mittel (2.4) zum Speichern von Informationen hinsichtlich des Ortes in dem Raster von Zellen, in denen die Bildmerkmale detektiert worden sind, eine zusätzliche Möglichkeit zur Kommunikation mit einem Computer (1.5) haben, um Daten zu lesen.

## Revendications

1. Dispositif de traitement d'images qui comprend
- une entrée pour recevoir un signal d'image présenté ligne par ligne en provenance d'un dispositif de saisie d'images (1.1), le signal d'image contenant des pixels;
- une mémoire de travail (2.1) pour stocker des pixels;
caractérisé en ce que le dispositif de traitement d'images contient
- un processeur (1.2) pour détecter des caractéristiques d'image dans le signal d'image à l'entrée;
- un dispositif à retard de plusieurs lignes d'image (1.3) qui retarde le signal d'image en provenance de l'entrée;
- des moyens (2.2) pour identifier une grille de cellules uniformes de plusieurs pixels dans le signal d'image;
- des moyens (2.3) pour ne stocker de manière sélective que les cellules dans lesquelles le processeur a détecté les caractéristiques d'image, les cellules étant stockées dans la mémoire de travail (2.1) via la ligne à retard (1.3), les cellules stockées de manière sélective étant retenues ensemble dans la mémoire de travail (2.1);
- des moyens (2.4) pour stocker l'information concernant l'emplacement des cellules stockées de manière sélective dans la grille, et
- des moyens (2.5) pour stocker l'information concernant la position et la nature des caractéristiques d'image détectées par cellule.

2. Dispositif de traitement d'images suivant la revendication 1, caractérisé en ce que les moyens de stockage sélectif (2.3) stockent également des cellules voisines desdites cellules dans lesquelles le processeur (1.2) a détecté les caractéristiques d'image, les moyens (2.4) servant à stocker l'information concernant l'emplacement des cellules stockées de manière sélective convenant pour le stockage de l'information concernant l'emplacement de cellules voisines des cellules dans lesquelles le processeur (1.2) a détecté les caractéristiques d'image.

3. Dispositif de traitement d'images suivant la revendication 1 ou 2, caractérisé en ce que le dispositif de traitement d'images comprend également des moyens (2.6) pour générer des adresses pour l'affichage de cellules, dans lesquelles les caractéristiques d'image ont été détectées, ainsi que de leurs cellules voisines, sur un dispositif d'affichage.

4. Dispositif de traitement d'images suivant l'une quelconque des revendications 1 à 3, caractérisé en ce que les moyens (2.5) servant à stocker l'information concernant l'emplacement et la nature des caractéristiques d'image détectées par cellule ont une possibilité supplémentaire de communication avec l'ordinateur (1.5) afin de lire les données.

5. Dispositif de traitement d'images suivant l'une quelconque des revendications 1 à 4, caractérisé en ce que les moyens (2.4) servant à stocker l'information concernant l'emplacement dans la grille de cellules dans lesquelles les caractéristiques d'image ont été détectées ont une possibilité supplémentaire de communication avec un ordinateur (1.5) afin de lire les données.
